# DEMANDE DE BREVET EUROPEEN

(11) **EP 0 539 266 A1**
(43) Date de publication de la demande: **28.04.1993**
(21) Numéro de dépôt: 92402789.9
(22) Date de dépôt: 13.10.1992
(51) Int. Cl.: H04B 10/00

(54) **Système de transmission et de conversion électrique de signaux optiques de puissance modulés en fréquence**

(30) Priorité: 25.10.1991 FR 9113217
(71) Demandeur: THOMSON-BRANDT ARMEMENTS, F-45240 La Ferté St. Aubin (FR)
(72) Inventeur: Boucard, Jean, THOMSON-CSF, F-92045 Paris la Defense (FR); Broussoux, Dominique, THOMSON-CSF, F-92045 Paris la Defense (FR)
(74) Mandataire: Benoit, Monique

(57) **Abrégé**

Le système selon l'invention comprend au moins une source d'énergie optique (1), des moyens optiques de transmission et de collection (L1, 3, L2) des signaux optiques de puissance transmis par la source, et un élément pyroélectrique (6) dont la fréquence de coupure thermique est supérieure à la fréquence de modulation des signaux optiques transmis par la source (1). L'élément pyroélectrique (6) convertit l'énergie optique en énergie électrique qui est mise en forme par des circuits de traitement (5) associés.

Application : télé-alimentations optiques.

## Description

La présente invention concerne un système de transmission et de conversion électrique de signaux optiques de puissance modulés en fréquence. Elle s'applique notamment aux réalisations de télé-alimentations optiques codées capables de transmettre une énergie suffisante durant un temps très court tout en restant insensibles à des environnements défavorables tels que les perturbations électromagnétiques par exemple, ces télé-alimentations permettant en outre, compte tenu de leur fréquence de coupure élevée, le passage simultané d'informations binaires codées en fréquences très élevées. Plus généralement, l'invention s'applique à toute transmission d'énergie optique dont la surface de réception est relativement faible.

Lorsqu'il est nécessaire de transmettre simultanément des signaux de commande et des signaux de puissance entre divers blocs d'éléments en mouvement ou fixes, la liaison optique, insensible aux perturbations électromagnétiques, permet de simplifier les connexions entre ces blocs d'éléments. Néanmoins, la voie optique nécessite la mise en oeuvre de dispositifs convertissant l'énergie optique en énergie électrique capable simultanément d'accepter de fortes puissances optiques, d'avoir des rendements élevés de conversion et des temps de réponse courts. Actuellement, ces propriétés ne peuvent être obtenues simultanément dans les photo-detecteurs classiques à base de semiconducteurs, par exemple de silicium, de germanium ou d'arséniure de gallium. En effet, ces éléments de réception et de conversion ne tolèrent pas des densités de puissance optique supérieures à 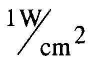 environ.

Ces limitations sont dues à des phénomènes physiques de recombinaison de surface des porteurs, qui font chuter le rendement de conversion aux fortes puissances optiques et aussi à l'échauffement dû à l'absorption de puissances élevées. En fait, seuls certains éléments de conversion photovoltaïques à base de silicium (spécialement développés par la société de droit des Etats-Unis d'Amérique, R.C.A.) acceptent des densités de puissance supérieures à 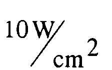 avec des rendements de conversion supérieurs à 10 % en lumière solaire. Ces éléments photovoltaïques ont été présentés dans la revue "RCA Review 38, 1977". L'inconvénient majeur de ces éléments est leur temps de réponse relativement long, ceux-ci sont de l'ordre du temps de vie des porteurs, c'est-à-dire environ 100µs, et ne permettent donc pas d'envisager des débits supérieurs à 10kHz.

Dans le cas d'applications pratiques, où il est nécessaire par exemple de transmettre à la fois une énergie optique de 1 joule pendant environ 100 ms voire 10 ms, avec une surface de réception imposée de l'ordre de 1 cm², soit une densité de puissance de 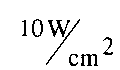 , voire 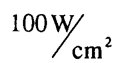 et des informations binaires de commande ou de configuration par exemple à des débits de 10 à 100 MHz, ni les photo-détecteurs classiques à base de semi-conducteur qui ne supportent pas de densités de puissance suffisante, ni les éléments de conversion photovoltaïques, trop lents, ne conviennent.

Le but de l'invention est de pallier les inconvénients précités.

A cet effet, l'invention a pour objet un système de transmission et de conversion électrique de signaux optiques de puissance modulés en fréquence comprenant au moins une source d'énergie optique, des moyens optiques de transmission et de collection des signaux optiques de puissance transmis par la source et des moyens de réception et de conversion des signaux optiques en signaux électriques caractérisé en ce que les moyens de réception et de conversion comprennent au moins un élément pyroélectrique.

L'invention a pour principaux avantages qu'elle permet la transmission simultanée de flux optiques de forte puissance à travers de faibles surfaces de réception et d'informations codées binaires à très haut débit, indépendamment de l'environnement électromagnétique, et qu'elle est facilement adaptable à n'importe quelle architecture de réseau de transmission.

D'autres caractéristiques et avantages de l'invention apparaîtront à l'aide de la description qui suit, faite en regard des dessins annexés qui représentent :
la figure 1, une structure de base d'un système de transmission d'énergie optique ;
la figure 2a, un mode de réalisation possible d'un système de transmission d'énergie optique selon l'invention ;
la figure 2b, une vue detaillée du dispositif de photo-réception de la figure 2a ;
la figure 3, une illustration d'une variante de la solution présentée par les figures 2a et 2b ;
la figure 4, une illustration d'une application possible d'un système de transmission et de conversion d'énergie optique selon l'invention.

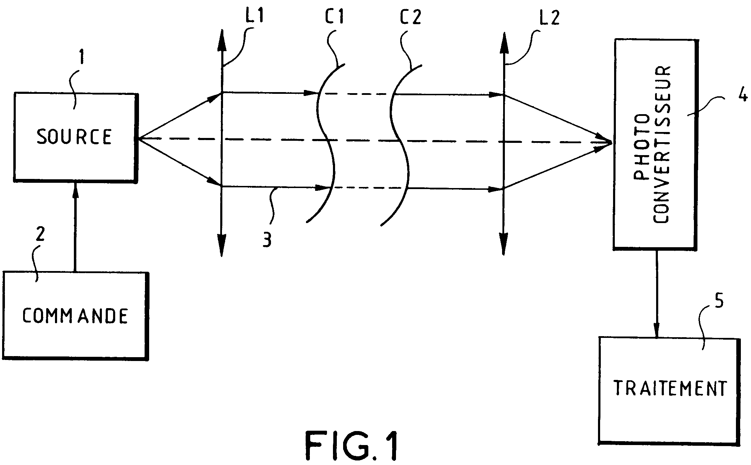

La figure 1 représente une structure connue de base d'un système de transmission d'énergie optique. Il est composé d'une source d'énergie optique 1 associé à des circuits électroniques de commande 2, d'une liaison optique 3 en faisceau optique aérien par exemple comprenant notamment des moyens de collection optique, dont des lentilles L1 et L2 par exemple, un photo-convertisseur 4 et des circuits électroniques de traitement et d'extraction 5. Le photo-convertisseur est par exemple constitué à base de semi-conducteurs. Sur la figure 1, les traits pointillés compris entre les lignes courbes C1 et C2 symbolisent la longueur de la liaison optique non définie a priori, celle-ci pouvant aller de quelques centimètres à plusieurs dizaines de mètres par exemple. Par ailleurs, la partie contenant la source d'énergie optique peut être solidaire ou non solidaire de la partie de photo-conversion et de traitement, et animée d'un mouvement de translation ou de rotation par rapport à cette partie.

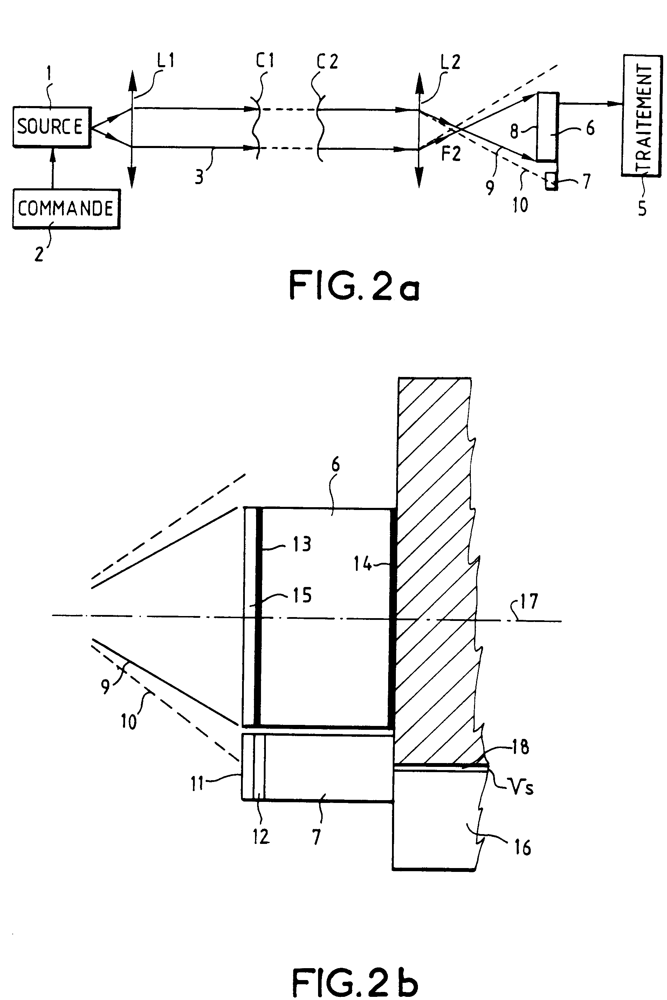

La figure 2a présente un mode de réalisation possible d'un système de transmission d'énergie optique selon l'invention. Ce système permet la conversion en énergie électrique d'un signal optique de puissance transmis par la liaison 3 à partir de la source 1. Ce signal optique de puissance est modulé à une fréquence f et converti en signal électrique de puissance au moyen d'un élément pyroélectrique 6 dont la fréquence de coupure thermique est très supérieure à la fréquence de modulation du signal optique transmis. La modulation du signal de puissance permet notamment le codage et le transfert des informations binaires. La fréquence de modulation de ce signal peut atteindre 10 à 100 MHz. L'avantage apporté par cet élément pyroélectrique 6 est qu'il accepte des densités de puissance supérieures à des photo-convertisseurs classiques, cette densité de puissance peut être de l'ordre de 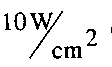 et même plus, suivant les structures possibles adoptées pour l'élément pyroélectrique 6. L'énergie convertie par l'élément pyroélectrique, égale à quelques joules par exemple, peut servir notamment à activer un dispositif auxiliaire ou tout autre partie ayant besoin d'une énergie d'activation. L'élément pyroélectrique 6 est situé de manière à recevoir le maximum d'énergie de la part du dispositif de réception de l'énergie lumineuse constitué par exemple par une lentille L2, F2 constituant le foyer de cette lentille. La face de réception de l'élément pyroélectrique 6 est confondu avec un plan parallèle à la lentille F2. Simultanément à la transmission de puissance, une information codée binaire est transmise. A cet effet par exemple, dans le système de la figure 2a, le signal optique de puissance peut être modulé en fréquence, cette modulation permettant de contenir l'information codée précitée. A la réception, un élément 7 de photo-réception basse puissance, de type photovoltaïque par exemple, convertit une partie du signal optique de puissance transmis. Ce récepteur peut admettre des densités de puissance d'environ 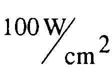 , ce qui est largement suffisant pour la faible puissance nécessaire pour l'utilisation des informations codées binaires à la réception.

Ce photo-récepteur 7 peut être réalisé à base de silicium ou d'arséniure de gallium par exemple. Il est disposé en dehors du cône 9 de sortie de la lentille L2 de sorte qu'il reste seulement la lumière diffusée symbolisée par le trait pointillé 10, peu énergétique mais toujours modulée suivant la fréquence f. La liaison optique 3 peut être réalisée par des fibres optiques de puissance, d'un diamètre d'environ 500 µm à 1 mm, ou réalisée par un faisceau optique aérien. Dans le cas d'une fibre optique des moyens de captation du rayon lumineux doivent être situés à l'arrivée et couplés à l'élément pyroélectrique 6. Le choix dépend notamment du type d'application. Des circuits de traitement 5 associés à l'élément pyroélectrique 6 et au photo-récepteur 7 permettent la mise en forme de l'énergie électrique stockée dans l'élément pyroélectrique 6 et la mise en forme des signaux de haut débits d'informations codées captées par le photo-récepteur 7.

La figure 2b représente une vue détaillée du dispositif de photo-réception de la figure 2a réalisé selon l'invention et constitué des éléments 6 et 7. L'élément pyroélectrique 6 comporte deux électrodes 13 et 14 de signes opposés permettant de collecter les charges créées lors de l'absorption du signal optique de puissance intérieure au cône 9. Ces charges provoquent l'apparition d'une tension entre ces deux électrodes et constituent la source électrique de puissance convertie. Pour améliorer le rendement de conversion, une couche 15 d'absorbant optique large bande est disposée sur la face réceptrice 8 de l'élément pyroélectrique 6 de manière à atténuer, voire supprimer les réflexions du signal optique de puissance à l'intérieur du cône 9. L'élément pyroélectrique 6 peut être constitué par exemple à base de céramiques en titanate de baryum, en plomb zirconium titane, en niobate de lithium ou de composites à base de poudre ferroélectriques mélangées à un liant plastique connu de l'homme de l'art, l'élément pyroélectrique 6 peut encore être constitué par exemple à base de polymères en polyfluorure de vinylidène, de polyfluorure de vynilidène-trifluoroéthylène ou d'un mélange des deux. Sur la figure 2b, cet élément pyroélectrique 6 est placé sur un support 16 repéré par des hachures, l'axe de symétrie 17 indique sa symétrie de révolution. L'élément photovoltaïque 7 associé et destiné à recevoir la lumière diffuse 10 comprend notamment une fenêtre optique 11 et une zone photo-réceptrice 12 ; son temps d'établissement est de l'ordre de 10 ns. Placé sur le support 16, il transmet à travers une liaison 18 isolée par exemple, un signal électrique Vₛ basse puissance contenant l'information codée binaire. Cette information peut servir par exemple à configurer, ou éventuellement commander, le dispositif activé par l'énergie fournie en sortie de l'élément pyroélectrique 6.

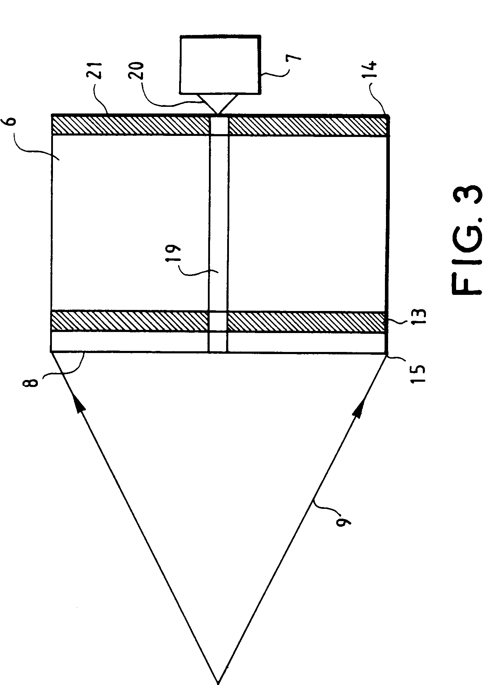

La figure 3 illustre une variante de la structure décrite par les figures 2a et 2b. Dans ce cas, le photo-récepteur basse puissance 7, constitué par exemple d'un élément photovoltaïque, est situé au centre du dispositif de photo-réception de puissance constitué par l'élément pyroélectrique 6. Le photo-récepteur basse puissance 7 étant en regard de la face 21 de l'élément pyroélectrique, opposé à la face 8 de réception. L'énergie lumineuse est transmise par exemple au moyen d'une fibre optique 19 traversant l'élément pyroélectrique 6 suivant son axe de symétrie. Le photo-récepteur basse puissance 7 capte la lumière diffusée comprise dans le cône 20 en sortie de la fibre optique 19 traversant l'élément pyroélectrique.

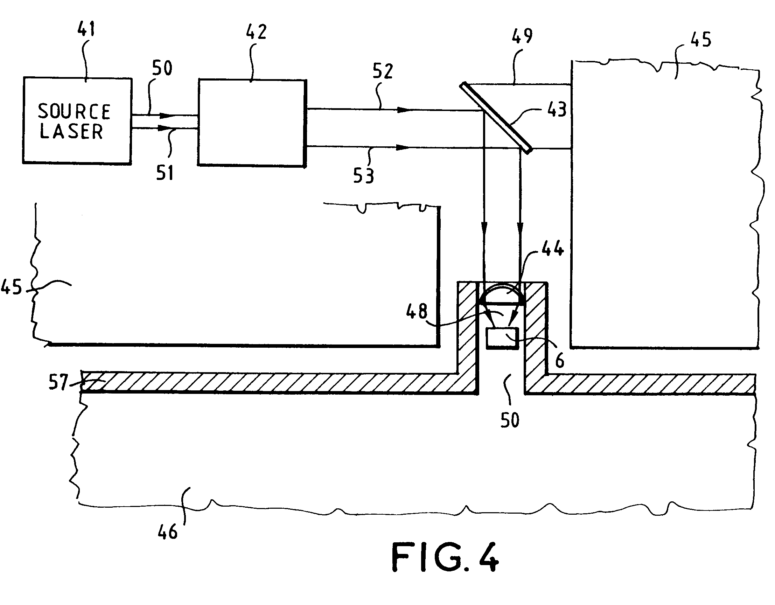

La figure 4 illustre une application possible d'un système de transmission et de conversion de l'énergie optique selon l'invention. Un dispositif est constitué de deux parties 45 et 46. La première partie 45 contient par exemple une source 41 à laser de puissance de type YAG par exemple, émettant un faisceau modulé en fréquence délimité par les traits 50 et 51, ce faisceau est élargi par un dispositif d'expansion 42 et délimité par les traits 52 et 53. Il se réfléchit sur un miroir 43 maintenu solidaire de la première partie 45 par un support 49 puis est capté par une lentille sphérique 44 solidaire de la deuxième partie 46. Cette lentille disposée à l'avant de l'élément pyroélectrique 6 concentre à l'intérieur d'un cône 48 le flux optique de puissance sur la face de réception de l'élément pyroélectrique qui le convertit en énergie électrique. La lentille sphérique 44 et l'élément pyroélectrique 6 sont par exemple fixés dans un cylindre de réception 50 vu en coupe sur la figure 4, ce cylindre étant en prolongement de la seconde partie 46 pénétrant à l'intérieur de la première partie 45 avec un jeu suffisamment grand pour supporter les faibles déplacements relatifs entre les deux parties 45 et 46. L'élargisseur de faisceau 42 permet de compenser ces légers déplacements relatifs de la seconde partie 46 par rapport à la première partie 45 de telle sorte que lors de tels déplacements, une grande partie de l'énergie reste captée par la lentille 44. La partie hachurée 57 illustre l'épaisseur de la seconde partie 46 et du cylindre de réception 50. Le système représenté sur la figure 4 peut par exemple transférer une énergie de 1 joule en moins de 100 ms, les surfaces de réception de la lentille sphérique 44 et de l'élément pyroélectrique 6 étant de l'ordre d'un centimètre carré. Sur cette figure, le récepteur basse puissance n'a pas été représenté pour des raisons de clarté mais chacune des solutions présentées à l'aide des figures précédentes peut être utilisée.

Ainsi, l'invention s'applique avantageusement à tout système où il est nécessaire, pour des raisons de sécurité et de résistance aux environnements hostiles, qu'une partie du système au moins, un aéronef par exemple, ait les informations et l'énergie nécessaire à l'activation d'une ou plusieurs autre partie(s) sensible, des munitions par exemple, ces dernières ayant le potentiel énergétique pour fonctionner mais restant inertes sans l'envoi par la première partie, à la fois d'une énergie de démarrage et d'informations binaires de commandes et de configuration, cette transmission devant répondre par ailleurs à des contraintes sévères d'environnement.

Par extension, l'invention s'applique à tout système dans lequel à un instant donné en mode opérationnel, deux éléments de ce système sont susceptibles de se séparer avec une grande sécurité, par exemple dans le cas d'étages de lanceurs aérospatiaux.

## Revendications

1. Système de transmission et de conversion électrique de signaux optiques de puissance modulés en fréquence comprenant au moins une source d'énergie optique (1), des moyens optiques de transmission et de collection (L1, 3, L2) des signaux optiques de puissance transmis par la source (1) et des moyens de réception et de conversion (6, 7) des signaux optiques en signaux électriques caractérisé en ce que les moyens de réception et de conversion (6, 7) comprennent au moins un élément pyroélectrique ( 6).

2. Système selon la revendication 1 caractérisé en ce que les moyens de réception et de conversion sont constitués au moins d'un élément pyroélectrique (6) pour la conversion d'une partie d'un signal optique de puissance transmis en signal électrique de puissance, associé à un photo-récepteur (7) pour la conversion de l'autre partie du signal optique de puissance transmis en signal optique codé.

3. Système selon l'une des revendications précédentes caractérisé en ce qu'il comprend des circuits de traitement (5) pour la mise en forme de l'énergie électrique stockée dans l'élément pyroélectrique (6) et la mise en forme des signaux codés transmis par le photo-récepteur (7).

4. Système selon l'une quelconque des revendications précédentes caractérisé en ce que l'élément pyroélectrique (6) contient une couche d'absorbant optique (15) large bande sur sa face réceptrice.

5. Système selon l'une quelconque des revendications précédentes caractérisé en ce que le photo-récepteur (7) est situé au centre de l'élément pyroélectrique (6) en regard de sa face (21) opposée à la face (8) de réception, le signal optique lui étant transmis par une fibre optique (19) traversant l'élément pyroélectrique (6).

6. Système selon l'une quelconque des revendications précédentes caractérisé en ce qu'une lentille sphérique (44) est disposée à l'avant de l'élément pyroélectrique (6) de manière à concentrer le flux optique sur la face de réception de l'élément pyroélectrique (6).
